# EUROPÄISCHE PATENTSCHRIFT

(11) **EP 3 245 869 B1**
(45) Veröffentlichungstag und Bekanntmachung des Hinweises auf die Patenterteilung: **06.03.2019**
(21) Anmeldenummer: 17000838.7
(22) Anmeldetag: 17.05.2017
(51) Int. Cl.: A01M 1/20, A01M 1/02

(54) **KÖDERDOSE**
BAIT BOX
BOÎTE D'APPÂTS

(30) Priorität: 18.05.2016 DE 202016003159 U
(43) Veröffentlichungstag der Anmeldung: 22.11.2017
(73) Patentinhaber: Rattex GmbH, 42657 Solingen (DE)
(72) Erfinder: Bartels, Rainer, 42657 Solingen (DE)
(74) Vertreter: Völger, Karl Wolfgang

(56) Entgegenhaltungen:
- EP-A1- 1 025 755
- WO-A1-94/22297
- US-A- 4 563 836
- US-A1- 2015 305 319

## Beschreibung

Die vorliegende Erfindung bezieht sich auf eine Köderdose zur Schädlingsbekämpfung und Befallsüberwachung.

Die Bekämpfung von Schädlingen, insbesondere Schadinsekten, ist in vielen Bereichen des täglichen Lebens erforderlich, auch wenn diese in der Regel nicht auffällt oder auffallen soll. Dabei sind gewerbliche Schädlingsbekämpfer in zunehmendem Maße verpflichtet, den notwendigen Insektizideinsatz zu reduzieren und die Wirkstoffe verdeckt und sicher, aber trotzdem wirkungsvoll auszubringen. Hierzu ist es häufig notwendig, vor einer Bekämpfungsmaßnahme eine Befallsermittlung durchzuführen, um die Insektizide gezielt einsetzen zu können.

Unter dem in der vorliegenden Erfindung verwendeten Begriff "Insekten" bzw. "Schadinsekten" werden alle Arten von Gliederfüßern (Arthropoda) verstanden, die zu bekämpfen bzw. zu überwachen sind.

Früher wurden Klebefallen aus Pappe mit ausgeschnittenen Sichtfenstern und einer Leimschicht auf der Grundfläche angewendet. Diese Klebefallen haben jedoch den Nachteil, dass sie nur kurzzeitig verwendbar sind, da Schmutz und ggf. Spritzwasser die Pappe und die Klebefläche schnell funktionsuntüchtig machen. Bei der nach Feststellung eines Befalls mit Schadinsekten oftmals notwendigen Bekämpfung mit Insektiziden muss darauf geachtet werden, diese möglichst schonend für Menschen und Umwelt einzusetzen.

Seit einigen Jahren werden Gele mit speziellen Insektiziden eingesetzt, die für Säugetiere unschädlich sind und nur Schadinsekten bekämpfen. Diese Gele haften auf vielen Oberflächen und können daher punktförmig an kritischen Punkten ausgebracht werden. Durch unsachgemäßen Einsatz wird jedoch häufig zu viel Gel ausgebracht. Auch diese Gele können nur für einen begrenzten Zeitraum eingesetzt werden, da Schmutz und Umwelteinflüsse ihre Wirksamkeit beeinträchtigen. Ein weiterer Nachteil dieser Methode ist, dass die ausgebrachten Gelpunkte wieder entfernt werden müssen und eine Dekontamination notwendig wird.

Es besteht daher weiterhin der Bedarf nach Möglichkeiten zur Befallsüberwachung und Schädlingsbekämpfung, bei denen sowohl die Anwender als auch die Nutzer der Örtlichkeiten in keiner Weise in Kontakt mit den Wirkstoffen kommen und die Ausbringung punktuell genau an den vorgesehenen Stellen erfolgen kann. Zudem sollte nach der Bekämpfung der Wirkstoff ohne jegliche Rückstände entfernbar sein.

Im Stand der Technik wurden daher bereits Vorschläge zur Erfüllung des Bedarfs gemacht. So beschreibt beispielsweise DE 199 05 062 A1 eine wieder befüllbare Köderdose aus einem zweiteiligen Behälter mit Oberteil und Unterteil, die über Verbindungselemente miteinander verbunden sind. Die Köderdose umfasst mindestens eine Schädlingseintrittsöffnung und mindestens eine Köderaufnahmevorrichtung, die die wiederholte Aufgabe und Entfernung eines Köders erlaubt. Ferner umfasst die Köderdose mindestens eine sich von Ober- zur Unterseite der Köderdose erstreckende Schutz- und Stabilisierungsvorrichtung, die gleichzeitig der Köderdose eine erhöhte Stabilität verleiht und den Köder vor direktem Zutritt von Schmutz und Verunreinigungen sowie dem Zugriff von außen durch die Schädlingseintrittsöffnung schützt. Diese Köderdose weist jedoch dahingehend Nachteile auf, dass durch die Ausgestaltung zunächst Hürden für die Schadinsekten zum Eintreten in diese Köderdose bestehen und die Schadinsekten anschließend nicht gezielt zum Insektizid geführt werden.

Eine ähnliche Köderdose mit Ober- und Unterteil, geschwungenen Seitenwänden und einer ein Insektizid aufnehmenden Kammer im Inneren der Köderdose ist beispielsweise aus der US 4 563 836 bekannt.

Ausgehend von den vorstehend genannten Nachteilen des Standes der Technik liegt der vorliegenden Erfindung die Aufgabe zugrunde, eine Köderdose bereitzustellen, die einerseits schnell und einfach zu geringen Kosten ausgebracht werden kann und andererseits Schädlinge zuverlässig anlockt, ohne dass das Schädlingsbekämpfungsmittel frei zugänglich ist.

Diese Aufgabe wird in der vorliegenden Erfindung durch eine Köderdose (1) gelöst, umfassend
- eine Bodenplatte (101),
- einen Deckel (103) und
- zumindest eine geschwungene Seitenwand (105), die mit der Bodenplatte (101) oder dem Deckel (103) zumindest teilweise verbunden ist,
wobei Bodenplatte (101), Deckel (103) und Seitenwand (105) zusammen zumindest eine Kammer (107) mit einer Befüll-Öffnung (107a) im Inneren der Köderdose (1), eine Eingangsöffnung (109) an einer Seite der Köderdose (1) und einen Gang (111) ausbilden,
wobei der Gang (111) von der Eingangsöffnung (109) zur Kammer (107) hin nicht geradlinig ausgebildet ist.

Die erfindungsgemäße Köderdose (1) weist allgemein den Vorteil auf, dass sie auch durch Laien ausgebracht werden kann, da sie ohne besondere Arbeitsschutz-Vorkehrungen einsetzbar ist. Nach Beendigung der Schädlingsbekämpfung bzw. der Befallsüberwachung kann die erfindungsgemäße Köderdose (1) einfach entfernt werden, ohne dass aufwändige Reinigungsarbeiten anfallen. Ferner ist die erfindungsgemäße Köderdose (1) einfach und kostengünstig herstellbar und kann so auch in größerer Zahl in Innenräumen und in Außenbereichen eingesetzt werden. Die erfindungsgemäße Köderdose (1) hat darüber hinaus eine gefällige Form, so dass die unauffällig auch in Wohn- oder Arbeitsräumen ausgebracht werden kann, ohne dass die beabsichtigte Schädlingsbekämpfung bzw. Befallsüberwachung sofort ins Auge fällt. Wird ein Gel als Insektizid verwendet, bleibt diese sehr wasserhaltige Substanz länger haltbar, da durch die Ausgestaltung der erfindungsgemäßen Köderdose (1) dessen Austrocknung stark verlangsamt wird.

Nachstehend wird die Erfindung im Detail beschrieben.

In einem ersten Aspekt bezieht sich die vorliegende Erfindung auf eine Köderdose (1), die eine Bodenplatte (101), einen Deckel (103) und zumindest eine geschwungene Seitenwand (105) aufweist. Dabei ist die Seitenwand (105) mit der Bodenplatte (101) oder dem Deckel (103) zumindest teilweise verbunden.

Die Bodenplatte (101) weist vorzugsweise bereits die Grundform der Köderdose (1) auf, während der Deckel (103) vorzugsweise eine im Wesentlichen gespiegelte Form der Bodenplatte (101) aufweist.

Unter "geschwungene Seitenwand" wird das Element der erfindungsgemäßen Köderdose (1) verstanden, das den Deckel (103) mit der Bodenplatte (101) verbindet und diese gegeneinander abstützt. Wie die Bezeichnung schon aussagt, ist die geschwungene Seitenwand nicht geradlinig ausgebildet, sondern verläuft im Bogen.

Bei der erfindungsgemäßen Köderdose (1) bilden Bodenplatte (101), Deckel (103) und Seitenwand (105) zusammen zumindest eine Kammer (107) mit einer Befüll-Öffnung (107a) im Inneren der Köderdose (1), eine Eingangsöffnung (109) an einer Seite der Köderdose (1) und einen Gang (111) aus.

In einer bevorzugten Ausführungsform ist die Bodenplatte (101) mit einem ersten Teil der geschwungenen Seitenwand (105) integral ausgebildet. Ferner ist der Deckel (103) mit einem zweiten Teil der geschwungenen Seitenwand (105) integral ausgebildet. Fertigungstechnisch hat das den Vorteil, dass für die erfindungsgemäße Köderdose (1) nur zwei Bauteile hergestellt werden müssen, die anschließend einfach zusammengefügt werden.

Bei diesem Fügen wird im Inneren der erfindungsgemäßen Köderdose (1) die Kammer (107) ausgebildet, die der Aufnahme eines Insektizids dient, vorzugsweise eines das Insektizid enthaltenden Gels. An der Position, an der durch das Fügen die Kammer (107) ausgebildet wird, weist die Bodenplatte (101) eine Befüll-Öffnung (107a) auf, durch welche das Insektizid bei bereits fertig gestellter Köderdose (1) eingebracht werden kann. Durch das Fügen wird ebenfalls der durchgehende Gang (111) mit der Eingangsöffnung (109) an der Außenseite der erfindungsgemäßen Köderdose (1) gebildet.

Die erfindungsgemäße Köderdose (1) zeichnet sich dadurch aus, dass der Gang (111) von der Eingangsöffnung (109) zur Kammer (107) hin nicht geradlinig ausgebildet ist. Diese erfindungsgemäße Ausgestaltung hat den Vorteil, dass das im Inneren der Köderdose (1) in der Kammer (107) aufgenommene Insektizid einerseits nicht direkt zugänglich und andererseits vor äußeren Einflüssen geschützt ist. Das heißt, das Insektizid ist vor dem Zugriff von beispielsweise Kindern oder Säugetieren sicher und wird vor Schmutz oder Witterung geschützt, so dass die Wirkungsdauer des Insektizids verlängert wird. Ferner ist sichergestellt, dass das Insektizid bei unsachgemäßer Handhabung der erfindungsgemäßen Köderdose (1) oder versehentlichem Entfernen vom vorgesehenen Ort im Inneren aufbewahrt bleibt und nicht nach außen gelangen kann.

Bei der erfindungsgemäßen Köderdose (1) ist der Gang (111) spiralförmig mit einer Drehung von mindestens 360° ausgebildet. Diese Drehung erfolgt insbesondere von außen nach innen.

Die Spiralform hat zunächst den Vorteil, dass die Gesamtstabilität der Köderdose (1) erhöht wird, da sich zwischen Bodenplatte (101), Deckel (103) und Seitenwand (105) ausgeprägte Anlageflächen ergeben. Durch die Spiralform kann die erfindungsgemäße Köderdose (1) auch mit das Insektizid enthaltenden nieder-viskosen Gelen befüllt und senkrecht ausgebracht werden, bspw. an einer Wand, ohne dass ein Auslaufen der nieder-viskosen Gele befürchtet werden muss. Selbst wenn die nieder-viskosen Gele im Laufe der Zeit zu fließen beginnen, sammeln sie sich immer am ersten tiefen Punkt der Spirale und können so nicht vollständig durch den Gang (111) auslaufen.

Ferner ist es für die erfindungsgemäße Köderdose (1) bevorzugt, wenn von der Eingangsöffnung (109) zur Kammer (107) hin die Breite und/oder die Höhe des Ganges (111) abnehmen.

Der sich auf diese Weise verengende Gang (111) stellt eine naturähnliche Situation dar und wird daher als ideales Versteck von vielen Schadinsekten akzeptiert. Der sich verengende Gang (111) bietet so einen Schutz vor Fraßfeinden und bildet daher eine bevorzugte Stelle zur eigenen Nahrungsaufnahme durch die Schadinsekten.

Um den Schadinsekten keine abwehrenden Hindernisse in den Weg zu legen, sondern ein leichtes Eintreten in die erfindungsgemäße Köderdose (1) zu ermöglichen, hat es sich als vorteilhaft herausgestellt, wenn die Bodenplatte (101) im Bereich der Eingangsöffnung (109) rampenförmig ausgebildet ist. Die Rampenform der Eingangsöffnung (109) stellt quasi eine Barrierefreiheit für die Schadinsekten sicher.

In einer Weiterbildung der erfindungsgemäßen Köderdose (1) sind die Oberflächen des Ganges (111) zumindest teilweise aufgeraut. "Zumindest teilweise" bedeutet, dass mindestens die Fläche des Ganges (111), die durch die Bodenplatte (101) gebildet wird, aufgeraut ist. Bevorzugt sind auch die Seitenwand (105) und/oder die Fläche des Ganges (111), die durch den Deckel (103) gebildet wird, aufgeraut. Vorzugsweise wird eine gemittelte Rauhtiefe 50 µm > Rz > 10 µm ausgebildet (Mittelwert aus den gemessenen Rauhtiefen).

Die aufgeraute Oberfläche des Ganges (111) täuscht für die Schadinsekten eine natürliche Umgebung vor, während glatte Oberflächen (wie z.B. bei Metalldosen) eine eher unnatürliche Umgebung widerspiegeln. Die Schadinsekten nehmen durch den Kontakt über ihre Tarsen die aufgeraute Oberfläche des Ganges (111) als eine natürliche und damit für sie sichere Umgebung wahr.

In einer anderen Ausführungsform der erfindungsgemäßen Köderdose (1) ist der Gang (111) von der Eingangsöffnung (109) zur Kammer (107) hin ansteigend ausgebildet. Hierdurch wird erreicht, dass auf der Unterseite der Bodenplatte (101) ausreichend Bauraum geschaffen wird, um eine Vertiefung (101a) und/oder eine Ausnehmung (111b) vorsehen zu können, ohne die Materialstärke der Bodenplatte (101) zu stark zu verringern.

Wie vorstehend beschrieben, wird in der Kammer (107) ein Insektizid deponiert, das zusammen mit einem Trägerstoff von den Schadinsekten aufgenommen wird. Dieser Trägerstoff ist bereits Anreiz für die Schadinsekten, zum Fressen in die erfindungsgemäße Köderdose (1) zu kommen. Um eine größere Wirkung zu erzielen, ist es vorteilhaft, zusätzlich zu dem Insektizid einen Lockstoff (z.B. ein Pheromon) in der Köderdose (1) zu platzieren, um die Schadinsekten anzulocken. Hierzu kann erfindungsgemäß die Bodenplatte (101) im Bereich des Ganges (111) zumindest eine durchgehende Öffnung (111a) aufweisen, an oder in der der Lockstoff angeordnet wird. Ferner kann die durchgehende Öffnung (111a) auf der Unterseite der Bodenplatte (101) eine Ausnehmung (111b) aufweisen, die zum Beispiel eine Lockstoff-Tablette aufnimmt. Die durchgehende Öffnung (111a) ist im Bereich des Ganges (111) vorzugsweise kurz vor der Kammer (107) angeordnet, um die Schadinsekten fast direkt zum Insektizid zu locken.

In einer Weiterbildung der Erfindung ist in der Unterseite der Bodenplatte (101) eine Vertiefung (101a) zur Aufnahme eines Befestigungsmittels vorgesehen. Die Vertiefung (101a) umschließt dabei die Befüll-Öffnung (107a) und ggf. die durchgehende Öffnung (111a).

Das Befestigungsmittel in der Vertiefung (101a) dient vorteilhafterweise einerseits dazu, die Befüll-Öffnung (107a) hinter dem Insektizid zu verschießen und ggf. die Lockstoff-Tablette in der Ausnehmung (111b) zu halten. Wenn andererseits in der Vertiefung (101a) als Befestigungsmittels beispielsweise ein doppelseitiges Klebeband vorgesehen wird, kann die erfindungsgemäße Köderdose (1) grundsätzlich an jedem Ort angebracht werden, auch senkrecht an bspw. Wänden und sogar über Kopf an Decken oder Unterseiten von bspw. Möbeln.

Es hat sich für den Erfolg der Schädlingsbekämpfung bzw. für die Befallsüberwachung als vorteilhaft herausgestellt, wenn das Material zumindest des Deckels (105) transparent oder teiltransparent ist.

Eine solche transparente oder halbtransparente Ausführung der erfindungsgemäßen Köderdose (1) ermöglicht dem Anwender zunächst die leichte Kontrolle der Füllmenge des Insektizid (und somit eine Kostenkontrolle bzw. Kostenersparnis). Darüber hinaus wird die Überwachung erleichtert. Ist erkennbar, dass das Insektizid aufgenommen wurde, wird somit ein Befall bestätigt. Wird das Insektizid nicht in größerem Umfang aufgenommen, kann die erfindungsgemäße Köderdose (1) auch über einen längeren Zeitraum als Monitorfalle betrieben werden, ohne dass die Gefahr besteht, dass das Insektizid beeinträchtigt und/oder als Verschmutzung am Objekt wahrgenommen wird. Durch den zumindest halbtransparenten Deckel (103) kann der Inhalt an Insektizid sowohl in Bezug auf die einzubringende Menge als auch in Bezug auf die durch Schadinsekten aufgenommene Menge kontrolliert werden.

Bei der erfindungsgemäßen Köderdose (1) ist das Material der Bodenplatte (101) und/oder des Deckels (103) und/oder der zumindest einen geschwungenen Seitenwand (105) bevorzugt Kunststoff.

Durch die Materialwahl ist die erfindungsgemäße Köderdose (1) leicht und kostengünstig herstellbar. Eine Wiederverwertung des Materials ist ebenfalls möglich. Als Kunststoffe werden vorzugsweise Thermoplaste eingesetzt, wobei eher zähe Werkstoffe bevorzugt sind, damit die Teile der erfindungsgemäßen Köderdose (1) bei Belastung nicht so leicht brechen. Sofern Teile der erfindungsgemäßen Köderdose (1) transparent oder teiltransparent ausgebildet sind, werden Polymethylmethacrylate (PMMA) und Polycarbonate als Material bevorzugt. Ein weiteres Auswahlkriterium ist neben der einfachen Verarbeitbarkeit die Kompatibilität mit handelsüblichen gut haftenden Klebepads als Befestigungsmittel.

Weitere Ziele, Merkmale, Vorteile und Anwendungsmöglichkeiten ergeben sich aus der nachfolgenden Beschreibung von die Erfindung nicht einschränkenden Ausführungsbeispielen anhand der Figuren. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbeziehung. Es zeigen:
- Fig. 1a: eine allgemeine, bildliche Darstellung einer erfindungsgemäßen Köderdose 1 nach einer Ausführungsform der Erfindung,
- Fig. 1b: eine schematische Darstellung einer erfindungsgemäßen Köderdose 1 nach einer Ausführungsform der Erfindung,
- Fig. 2: eine schematische, perspektivische Darstellung des Unterteils einer erfindungsgemäßen Köderdose 1 nach einer Ausführungsform der Erfindung,
- Fig. 3: eine schematische Darstellung eines Deckels 103 einer erfindungsgemäßen Köderdose 1 nach einer Ausführungsform der Erfindung und
- Fig. 4: eine schematische Darstellung der Unterseite einer erfindungsgemäßen Köderdose 1 nach einer Ausführungsform der Erfindung.

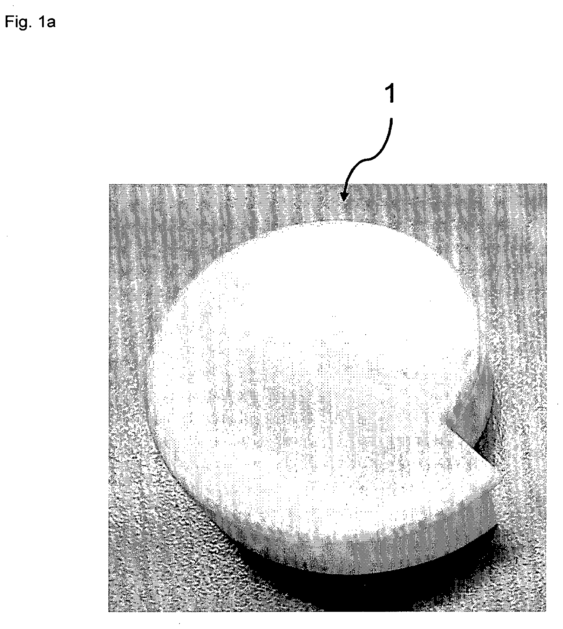

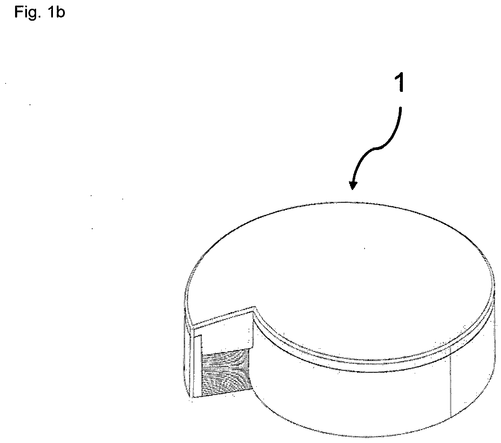

Figur 1 zeigt eine Ausführungsform der erfindungsgemäßen Köderdose 1, die an ein Schneckenhaus erinnert und damit ein ansprechendes äußeres Erscheinungsbild hat. Diese Ausführungsform entspricht in keiner Weise herkömmlichen Köderdosen zur Schädlingsbekämpfung oder Befallsüberwachung.

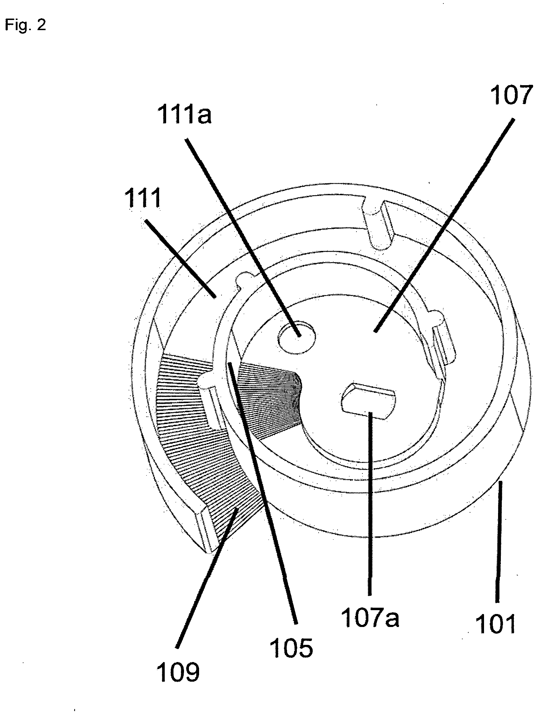

In Figur 2 wird die in Figur 1 gezeigte erfindungsgemäße Köderdose 1 im offenen Zustand dargestellt, wobei die Bodenplatte 101 und ein erster Teil der geschwungenen Seitenwand 105 integral miteinander gebildet sind, in der vorliegenden Ausführungsform als ein gemeinsames Bauteil (d.h. Unterteil). Sehr gut ist der barrierefreie Zugang für die Schadinsekten in den Gang 111 über die Eingangsöffnung 109 zu erkennen. Der Gang 111 führt spiralförmig nach innen gedreht um etwas mehr als 360° und vom Niveau her leicht ansteigend in die Kammer 107, die in einer bevorzugten Ausführungsform als Gelkammer ausgeführt ist.

Die Kammer 107 weist unten, das heißt, in der Bodenplatte 101, eine Befüll-Öffnung 107a auf, durch welche ein Insektizid eingeführt werden kann. In der vorliegenden Ausführungsform ist das Insektizid in einem Gel aufgenommen, um es zu trägern und gut handhaben zu können. Das Gel selbst kann für die Schadinsekten als Nahrung gelten. Alternativ kann das Insektizid als flüssiges, höherviskoses oder als pastöses Präparat in die Kammer 107 eingebracht werden.

Zum Einbringen eignen sich insbesondere Kanülen oder Spritzen, aus denen heraus das Insektizid ohne direkten Kontakt zur handhabenden Person sicher verarbeitet werden kann. Hier besteht der Vorteil, dass die erfindungsgemäße Köderdose 1 befüllt bzw. wiederbefüllt werden kann, ohne diese öffnen und in ihre beiden Teile zerlegen zu müssen. Hierdurch wird ferner erreicht, dass beim Nachlassen der Wirkung des Insektizids und/oder des Lockstoffs diese in einfacher Weise nachgefüllt werden können.

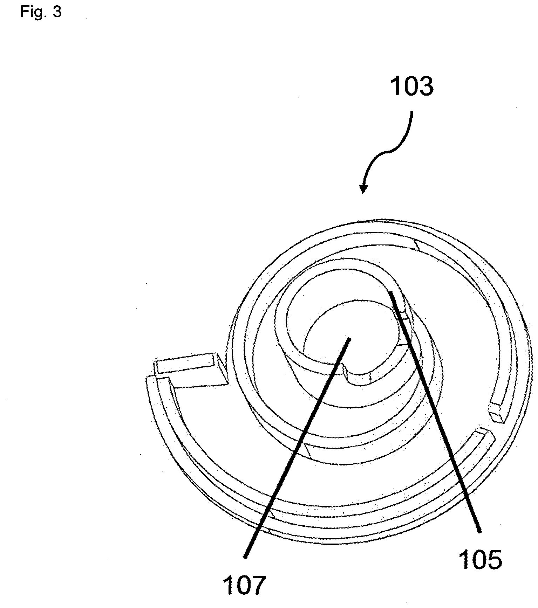

In Figur 3 wird der Deckel 103 dargestellt, wobei dieser mit einem zweiten Teil der geschwungenen Seitenwand 105 integral gebildet ist, in der vorliegenden Ausführungsform als ein gemeinsames Bauteil. In der Figur ist insbesondere der Teil der geschwungenen Seitenwand 105 zu erkennen, der die Kammer 107 ausbildet.

Der in Figur 3 dargestellte Deckel 103 wird zur Herstellung der erfindungsgemäßen Köderdose 1 formschlüssig mit dem in Figur 2 dargestellten Bauteil verbunden. Dies kann über einen reinen Klemmsitz oder über hier nicht dargestellte Rastnasen erfolgen. Es ist ferner möglich, durch die Verwendung von passenden Klebstoffen eine stoffschlüssige Verbindung herzustellen.

Insbesondere eine Ausführungsform, in der die beiden Hälften der erfindungsgemäßen Köderdose 1 über einen Klemmsitz miteinander verbunden werden, bietet die Möglichkeit, die Köderdose 1 wieder zu verwenden, indem sie geöffnet, ggf. gereinigt und wieder verschlossen wird. Diese Möglichkeit ist bei herkömmlichen Köderdosen häufig nur mit größerem Aufwand möglich. Abhängig von der Größe der erfindungsgemäßen Köderdose 1 und den Materialkosten kann eine Entsorgung mit anschließender Rezyklierung wirtschaftlich sinnvoller sein.

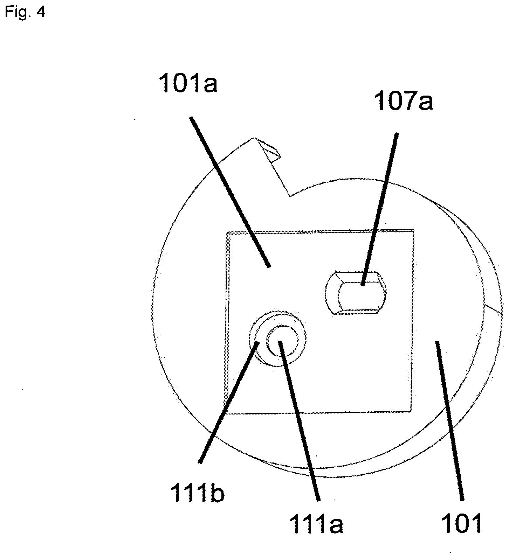

Figur 4 zeigt die Unterseite der erfindungsgemäßen Köderdose 1, das heißt, die Bodenplatte 101, in der die Befüll-Öffnung 107a (zur Kammer 107), die durchgehende Öffnung 111a (zum Gang 111) und die an der durchgehenden Öffnung 111a angeordnete Ausnehmung 111b zu sehen sind. Die Ausnehmung 111b kann dabei so ausgestaltet sein, dass eine Lockstoff-Tablette (z.B. mit Pheromonen) hineingeklemmt werden kann, ohne dass eine weitere Befestigung vorgenommen werden muss.

Durch den im Gang 111 angeordneten Lockstoff werden die Schadinsekten durch den Gang 111 hindurch gelockt und direkt zur Kammer 107 mit dem Insektizid geführt. Wie vorstehend ausgeführt, ist die erfindungsgemäße Köderdose 1 so gestaltet, dass die Schadinsekten sie als naturähnliche Umgebung und zudem sicheren Ort auffassen, so dass eine sichere Bekämpfung gewährleistet wird.

Die erfindungsgemäße Köderdose 1 kann einfach an den kritischen Punkten ausgelegt werden. Es empfiehlt sich, die Befüll-Öffnung 107a und die durchgehende Öffnung 111a vor dem Auslegen zu verschließen. Ferner kann die erfindungsgemäße Köderdose 1 durch Vorsehen eines doppelseitigen Klebebands oder eines entsprechenden Befestigungsmittels in der Vertiefung 101a auch sicher an verschiedenen Untergründen befestigt werden.

Eine Ausführungsform der erfindungsgemäßen Köderdose 1 ist für die Bekämpfung kleinerer Schadinsekten wie Ameisen, Silberfischchen und Schaben (z.B. Deutsche Schabe (Blattella germanica) auch Schwabenkäfer) ausgelegt und weist einen Durchmesser von 4 cm bis 6 cm auf. Der Gang 111 hat in dieser Ausführungsform eine Breite von 0,5 cm bis 1,5 cm, bevorzugt ferner eine Höhe von 0,5 cm bis 1,5 cm.

Eine andere Ausführungsform der erfindungsgemäßen Köderdose 1 kann für die Bekämpfung der Gemeinen Küchenschabe (Blatta orientalis) ausgelegt sein und weist einen Durchmesser von 10 cm bis 15 cm auf. Der Gang 111 hat in dieser Ausführungsform eine Breite von 1,5 cm bis 4 cm, bevorzugt ferner eine Höhe von 1,5 cm bis 4 cm.

In einer Weiterbildung ist die durchgehende Öffnung 111a für die Platzierung von Lockstoff-Tabletten (mit Aggregationspheromonen und Düften) für eine stärkere Anziehungskraft bei der Bekämpfung von Schaben ausgelegt, insbesondere zur Bekämpfung der Deutschen Schabe.

### Bezugszeichen

- 1: Köderdose
- 101: Bodenplatte
- 101a: Vertiefung
- 103: Deckel
- 105: geschwungene Seitenwand
- 107: Kammer
- 107a: Befüll-Öffnung
- 109: Eingangsöffnung
- 111: Gang
- 111a: durchgehende Öffnung
- 111b: Ausnehmung

## Patentansprüche

1. Köderdose (1) umfassend
- eine Bodenplatte (101),
- einen Deckel (103) und
- zumindest eine geschwungene Seitenwand (105), die mit der Bodenplatte (101) oder dem Deckel (103) zumindest teilweise verbunden ist,
wobei Bodenplatte (101), Deckel (103) und Seitenwand (105) zusammen zumindest eine Kammer (107) mit einer Befüll-Öffnung (107a) im Inneren der Köderdose (1), eine Eingangsöffnung (109) an einer Seite der Köderdose (1) und einen Gang (111) ausbilden,
wobei der Gang (111) von der Eingangsöffnung (109) zur Kammer (107) hin spiralförmig mit einer Drehung von mindestens 360° ausgebildet ist.

2. Köderdose (1) nach Anspruch 1, wobei von der Eingangsöffnung (109) zur Kammer (107) hin die Breite und/oder die Höhe des Ganges (111) abnehmen.

3. Köderdose (1) nach einem der Ansprüche 1 oder 2, wobei die Bodenplatte (101) im Bereich der Eingangsöffnung (109) rampenförmig ausgebildet ist.

4. Köderdose (1) nach einem der Ansprüche 1 bis 3, wobei die Oberflächen des Ganges (111) zumindest teilweise aufgeraut sind.

5. Köderdose (1) nach einem der Ansprüche 1 bis 4, wobei der Gang (111) von der Eingangsöffnung (109) zur Kammer (107) hin ansteigend ausgebildet ist.

6. Köderdose (1) nach einem der Ansprüche 1 bis 5, wobei die Bodenplatte (101) im Bereich des Ganges (111) zumindest eine durchgehende Öffnung (111a) aufweist.

7. Köderdose (1) nach einem der Ansprüche 1 bis 6, wobei in der Unterseite der Bodenplatte (101) eine Vertiefung (101a) zur Aufnahme eines Befestigungsmittels vorgesehen ist.

8. Köderdose (1) nach einem der Ansprüche 1 bis 7, wobei das Material zumindest des Deckels (105) transparent oder teiltransparent ist.

9. Köderdose (1) nach einem der Ansprüche 1 bis 8, wobei das Material der Bodenplatte (101) und/oder des Deckels (103) und/oder der zumindest einen geschwungenen Seitenwand (105) Kunststoff ist.

## Claims

1. Bait box (1) comprising
- a bottom plate (101),
- a cover (103) and
- at least one curved side wall (105) which is connected at least in part to the bottom plate (101) or the cover (103),
while bottom plate (101), cover (103) and side wall (105) together form at least one compartment (107) with a filling opening (107a) inside the bait box (1), an entrance opening (109) at the side of the bait box (1) and a passage (111),
the passage (111) being designed in a spiral way between entrance opening (109) and compartment (107), with a turning of at least 360°.

2. Bait box (1) according to claim 1, wherein the width and/or the height of the passage (111) decrease between entrance opening (109) and compartment (107).

3. Bait box (1) according to one of claims 1 or 2, wherein the bottom plate (101) is designed as ramp in the area of the entrance opening (109).

4. Bait box (1) according to one of claims 1 or 3, wherein the surfaces of the passage (111) are at least in part roughened.

5. Bait box (1) according to one of claims 1 or 4, wherein the passage (111) is designed in an ascending way between the entrance opening (109) and the compartment (107).

6. Bait box (1) according to one of claims 1 or 5, wherein the bottom plate (101) has at least one through-going opening (111a) in the passage area (111).

7. Bait box (1) according to one of claims 1 or 6, wherein the lower side of the bottom plate (101) provides a depression for a fixing means.

8. Bait box (1) according to one of claims 1 or 7, wherein at least the material of the cover (103) is transparent or partly transparent.

9. Bait box (1) according to one of claims 1 or 8, wherein plastic material is used for the bottom plate (101) and/or for the cover (103) and/or for at least one curved side wall (105).

## Revendications

1. Boîte d'appâts (1), comprenant
- une plaque de fond (101),
- un couvercle (103) et
- au moins une paroi latérale (105) arquée qui est reliée au moins partiellement à la plaque de fond (101) ou au couvercle (103),
la plaque de fond (101), le couvercle (103) et la paroi latérale (105) formant ensemble au moins un compartiment (107) pourvu d'une ouverture de remplissage (107a) à l'intérieur de la boîte d'appâts (1), une ouverture d'entrée (109) sur un côté de la boîte d'appâts (1) et un couloir (111),
ledit couloir (111) étant, de l'ouverture d'entrée (109) jusqu'au compartiment (107), formé en hélice à une rotation d'au moins 360°.

2. Boîte d'appâts (1) selon la revendication 1, la largeur et/ou la hauteur du couloir (111) diminuant de l'ouverture d'entrée (109) jusqu'au compartiment (107).

3. Boîte d'appâts (1) selon l'une quelconque des revendications 1 ou 2, la plaque de fond (101) étant en forme de rampe au niveau de l'ouverture d'entrée (109).

4. Boîte d'appâts (1) selon l'une quelconque des revendications 1 à 3, les surfaces du couloir (111) étant au moins partiellement rendues rugueuses.

5. Boîte d'appâts (1) selon l'une quelconque des revendications 1 à 4, le couloir (111) étant formé en pente montante de l'ouverture d'entrée (109) au compartiment (107).

6. Boîte d'appâts (1) selon l'une quelconque des revendications 1 à 5, la plaque de fond (101) présentant au moins une ouverture traversante (111a) au niveau du couloir (111).

7. Boîte d'appâts (1) selon l'une quelconque des revendications 1 à 6, étant prévu dans le dessous de la plaque de fond (101) un creux (101a) destiné à recevoir un moyen de fixation.

8. Boîte d'appâts (1) selon l'une quelconque des revendications 1 à 7, le matériau du couvercle (105) au moins étant transparent ou partiellement transparent.

9. Boîte d'appâts (1) selon l'une quelconque des revendications 1 à 8, le matériau de la plaque de fond (101) et/ou du couvercle (103) et/ou d'au moins une paroi latérale (105) arquée étant de la matière plastique.
